# EUROPEAN PATENT APPLICATION

(11) **EP 2 879 208 A1**
(43) Date of publication of application: **03.06.2015**
(21) Application number: 14170673.9
(22) Date of filing: 30.05.2014
(51) Int. Cl.: H01M 4/02, H01G 9/00, H01M 10/12, H01M 12/00, H01M 4/583, H01M 10/14

(54) **Lead-acid battery**

(30) Priority: 28.11.2013 TW 102143505
(71) Applicant: CSB Battery Co., Ltd., Taipei City 111 (TW)
(72) Inventor: Ko, Shao-Jen, 701 Tainan City (TW)
(74) Representative: Nicholls, Michael John

(57) **Abstract**

A lead-acid battery includes a battery chamber (10) containing therein a sulfate-based electrolyte solution (5), a lead-based negative electrode unit (22), a lead dioxide-based positive electrode unit (21), a separator unit (3) spaced apart from one of the lead-based negative electrode unit (22) and the lead dioxide-based positive electrode unit (21) by a gap unit (6), and a capacitor electrode unit (4) made of a carbon-based fiber material, and configured to be fitted in the gap unit (6) so as to be brought into direct contact with said one of the lead-based negative electrode unit (22) and the lead dioxide-based positive electrode unit (21).

## Description

This invention relates to a lead-acid battery, more particularly to a lead-acid battery with capacitor electrodes.

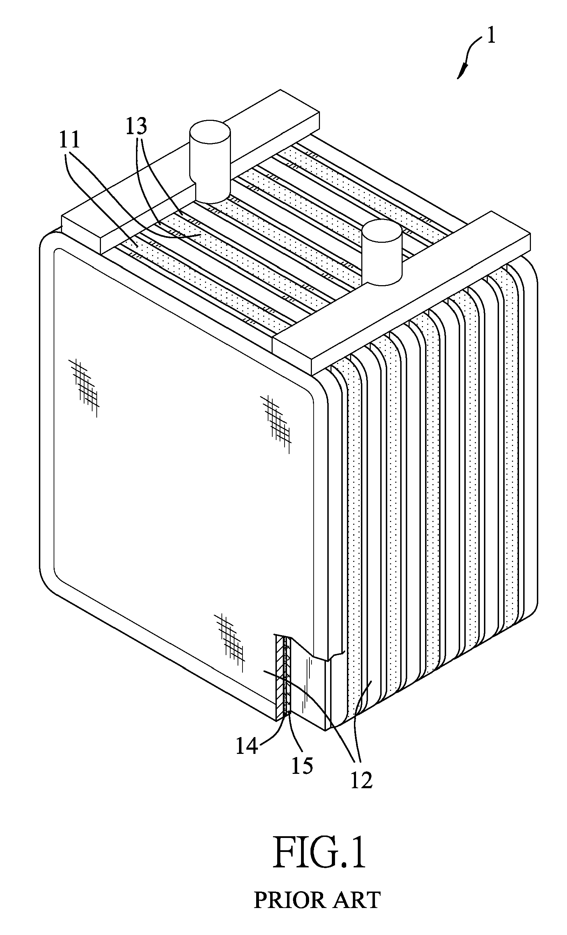

Referring to Fig. 1, a conventional lead-acid battery includes a plurality of lead dioxide-based positive electrodes 11, a plurality of lead-based negative electrodes 12, and a plurality of separators 13, a plurality of adhesive layers 14, and a plurality of capacitor electrodes 15. Each of the capacitor electrodes 15 contains carbon fibers and is bonded to a respective one of the positive and negative electrodes 11, 12 by virtue of the respective adhesive layer 14. However, the presence of the adhesive layers 14 among the electrodes 11, 12, 15 would adversely affect the charging and discharging performance of the lead-acid battery.

U.S. patent no. 8232006 discloses high performance energy storage devices, such as lead-acid batteries, each including at least one lead-based negative electrode, at least one lead dioxide-based positive electrode, at least one capacitor electrode, and an electrolyte in contact with the electrodes. The capacitor electrode includes a current collector (metal grid) and a pasted coating containing a capacitor material (such as a carbon material) and a binder. Although the capacitor material may have a high surface area, the presence of the binder would reduce the overall surface area of the capacitor electrode and adversely affect the uniformity or continuity of the capacitor material. As such, the capacitor electrode may have a limited capacitance.

Therefore, an object of the present invention is to provide a lead-acid battery in which capacitor electrodes are made by a relatively simple process without using a binder, and in which the capacitor electrodes have a relatively large surface area to thereby have a relatively large capacitance.

Accordingly, a lead-acid battery of this invention includes: a battery chamber containing therein a sulfate-based electrolyte solution; a lead-based negative electrode unit submerged in the sulfate-based electrolyte solution and extending in a lengthwise direction; a lead dioxide-based positive electrode unit submerged in the sulfate-based electrolyte solution and extending in the lengthwise direction; a separator unit which is submerged in the sulfate-based electrolyte solution, which extends in the lengthwise direction, and which is spaced apart from one of the lead-based negative electrode unit and the lead dioxide-based positive electrode unit in a transverse direction transverse to the lengthwise direction by a gap unit; and a capacitor electrode unit made of a carbon-based fiber material, and extending in the lengthwise direction. The capacitor electrode unit is configured to be fitted in the gap unit so as to be brought into direct contact with said one of the lead-based negative electrode unit and the lead dioxide-based positive electrode unit.

Other features and advantages of the present invention will become apparent in the following detailed description of the preferred embodiments of the invention, with reference to the accompanying drawings, in which:
Fig. 1 is a schematic view of a conventional lead-acid battery;
Fig. 2 is a partially sectioned view of a lead-acid battery according to a first preferred embodiment of this invention;
Fig. 3 is a partially sectioned view of a lead-acid battery according to a second preferred embodiment of this invention;
Fig. 4 is a partially sectioned view of a lead-acid battery according to a third preferred embodiment of this invention;
Fig. 5 is a partially sectioned view of a lead-acid battery according to a fourth preferred embodiment of this invention;
Fig. 6 is a partially sectioned view of a lead-acid battery according to a fifth preferred embodiment of this invention; and
Fig. 7 is a partially sectioned view of a lead-acid battery according to a sixth preferred embodiment of this invention.

Before the present invention is described in greater detail, it should be noted herein that same reference numerals are used to denote like elements throughout the specification.

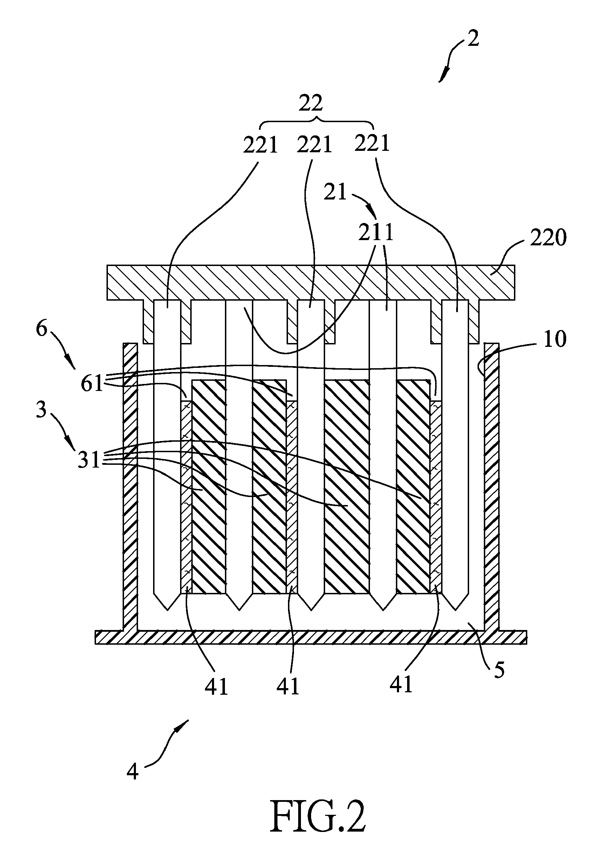

Referring to Fig. 2, a lead-acid battery according to a first preferred embodiment of this invention includes a battery chamber 10, a lead-based negative electrode unit 22, a lead dioxide-based positive electrode unit 21, a separator unit 3, and a capacitor electrode unit 4.

The battery chamber 10 contains therein a sulfate-based electrolyte solution 5. Preferably, the sulfate-based electrolyte solution 5 is a sulfuric acid solution.

The lead-based negative electrode unit 22 is submerged in the sulfate-based electrolyte solution 5 and extends in a lengthwise direction. The lead dioxide-based positive electrode unit 21 also is submerged in the sulfate-based electrolyte solution 5 and extends in the lengthwise direction. The separator unit 3 is submerged in the sulfate-based electrolyte solution 5, extends in the lengthwise direction, and is spaced apart from one of the lead-based negative electrode unit 22 and the lead dioxide-based positive electrode unit 21 in a transverse direction transverse to the lengthwise direction by a gap unit 6. The capacitor electrode unit 4 is made of a carbon-based fiber material, and extends in the lengthwise direction. The capacitor electrode unit 4 is configured to be fitted in the gap unit 6 so as to be brought into direct contact with said one of the lead-based negative electrode unit 22 and the lead dioxide-based positive electrode unit 21.

Preferably, the lead-based negative electrode unit 22 includes a plurality of negative electrodes 221 displaced from one another in the transverse direction and electrically connected to a negative busbar 220. The lead dioxide-based positive electrode unit 21 includes a plurality of positive electrodes 211 disposed alternately with the negative electrodes 221 and electrically connected to a positive busbar (not shown). The negative and positive electrodes 221, 211 may be any type of electrodes suitable for use in a lead-acid battery. In this embodiment, each of the negative and positive electrodes 221, 211 includes a metal grid (a current collector, not shown, usually made of lead or lead alloy), and an electrochemically active material (lead or lead dioxide) which is supported by and pasted onto the metal grid.

The gap unit 6 includes a plurality of gaps 61.

The separator unit 3 includes a plurality of separators 31, each of which is disposed to separate an adjacent pair of the negative and positive electrodes 221, 211. One of the negative and positive electrodes 221, 211 in each adjacent pair of the negative and positive electrodes 221, 211 is spaced apart from an adjacent one of the separators 31 by a respective one of the gaps 61. Each of the separators 31 is constituted by a porous structure, and is made from, for example, a cotton fiber web or a glass fiber web. In this embodiment, each of the negative electrodes 221 is spaced apart from a corresponding one of the separators 31 by a respective one of the gaps 61.

The capacitor electrode unit 4 includes a plurality of capacitor electrodes 41 each of which is disposed to be fitted in the respective one of the gaps 61 so as to be brought into contact with one of the negative and positive electrodes in an adjacent pair of the negative and positive electrodes 221, 211 for sharing the same charge polarity therewith. In this embodiment, each of the capacitor electrodes 41 is fitted in the respective one of the gaps 61 and is brought into contact with the corresponding one of the negative electrodes 221. Each of the negative electrodes 221 has only one side in direct contact with a corresponding one of the capacitor electrodes 41.

It should be noted that no adhesive is provided between each capacitor electrode 41 and the corresponding one of the negative electrodes 221.

The capacitor electrodes 41 are flexible, and are made from a carbon fiber fabric. In this preferred embodiment, the carbon fiber fabric is manufactured by subjecting a precursor polymer web to a carbonization treatment so as to permit carbon fibers in the carbon fiber fabric to extend continuously. The precursor polymer web is made from polyacrylonitrile-based material, pitch-based material, cellulose-based material, or phenol formaldehyde resins. In one preferred embodiment, the carbon fiber fabric is manufactured by weaving carbon fiber yarns. Because the capacitor electrodes 41 are made from a carbon fiber fabric, they are porous and have evenly dispersed carbon fibers.

Preferably, the carbon fiber fabric is subjected to a surface functionalization treatment. The surface functionalization treatment may be a heat treatment which is implemented at a temperature ranging from 300 °C to 500°C, a plasma treatment, or a chemical treatment which is implemented using a surface modifier that contains metal elements and that excludes sulfur elements.

Preferably, each of the capacitor electrodes 41 has a thickness ranging from 0.1 mm to 2.0 mm and a specific surface area greater than 800 m²/g, and is disposed to cover 10∼100 percent of a total surface area of a respective one of the negative and positive electrodes 221, 211 based on actual requirements. In this embodiment, each of the capacitor electrodes 41 has a thickness of 0.4 mm, and is disposed to cover 90 percent of the total surface area of the corresponding one of the negative electrodes 221.

Preferably, each of the capacitor electrodes 41 is adhesively bonded to the corresponding one of the separators 31 using an adhesive. The adhesive can be any adhesive that does not react with the sulfate-based electrolyte solution, and is, for example, a fluorine-based polymer adhesive, an acrylate-based adhesive, a polystyrene-based adhesive, a phenol-based adhesive, or a silicon dioxide adhesive. The fluorine-based polymer adhesive may be a tetrafluoroethylene adhesive.

In this embodiment, the lead-acid battery is a valve-regulated lead-acid (VRLA) battery, and the provision of the capacitor electrodes 41 permits oxygen generated by the positive electrodes 211 in a battery charging process to pass through the porous separators 31 and the porous capacitor electrodes 41 to combine with hydrogen adsorbed on the negative electrodes 221 to thereby form water. Thus, water loss in the VRLA battery can be prevented.

When assembling the lead-acid battery of this embodiment, each of the capacitor electrodes 41 is adhesively bonded to one of the separators 31. Each of the separators 31, with or without the capacitor electrodes 41, is disposed to separate an adjacent pair of the negative and positive electrodes 221, 211 in the battery chamber 10. Thereafter, the sulfate-based electrolyte solution 5 is filled in the battery chamber 10, which is then sealed.

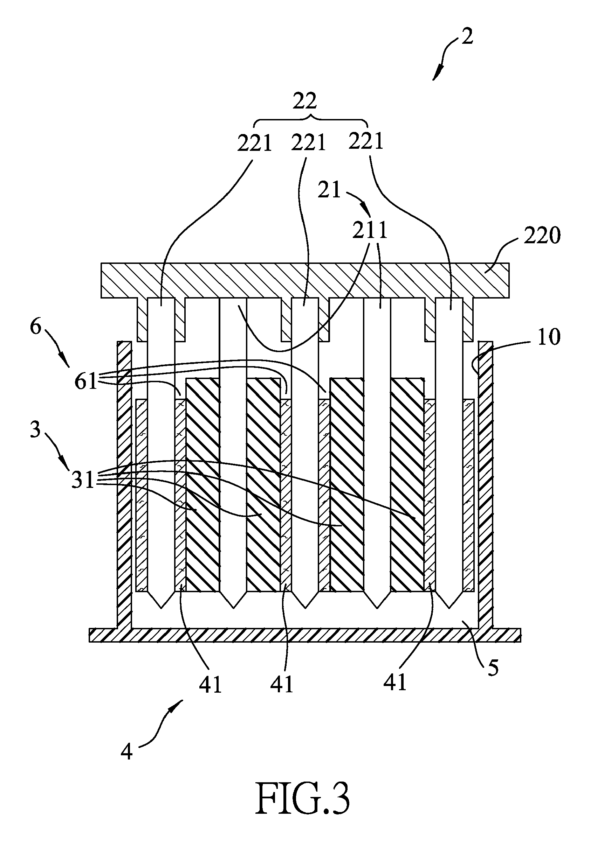

Fig. 3 illustrates a lead-acid battery according to a second preferred embodiment of this invention. The second preferred embodiment is similar to the first preferred embodiment, except that, in the second preferred embodiment, each of the negative electrodes 221 has two sides in direct contact with two corresponding ones of the capacitor electrodes 41, respectively.

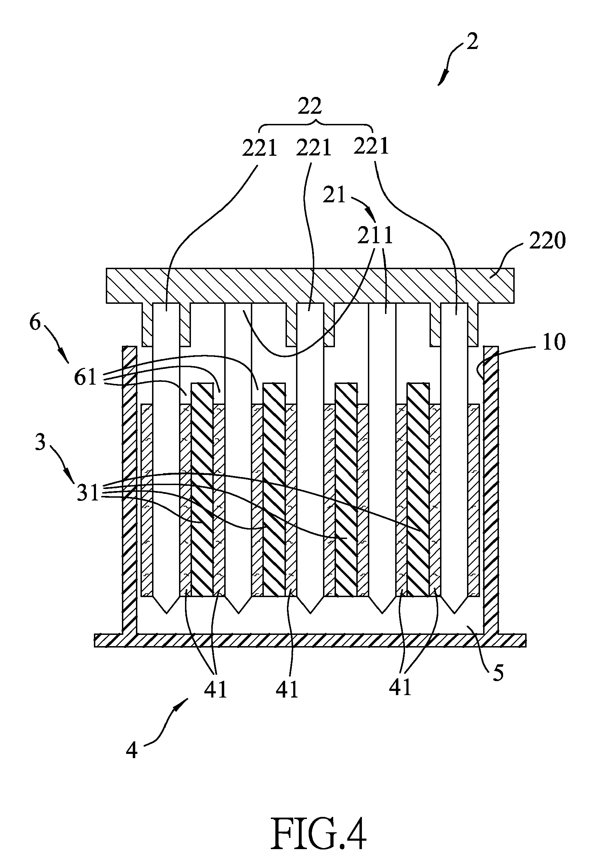

Fig. 4 illustrates a lead-acid battery according to a third preferred embodiment of this invention. The third preferred embodiment is similar to the second preferred embodiment, except that, in the third preferred embodiment, each of the negative and positive electrodes 221, 211 has two sides in direct contact with two corresponding ones of the capacitor electrodes 41, respectively.

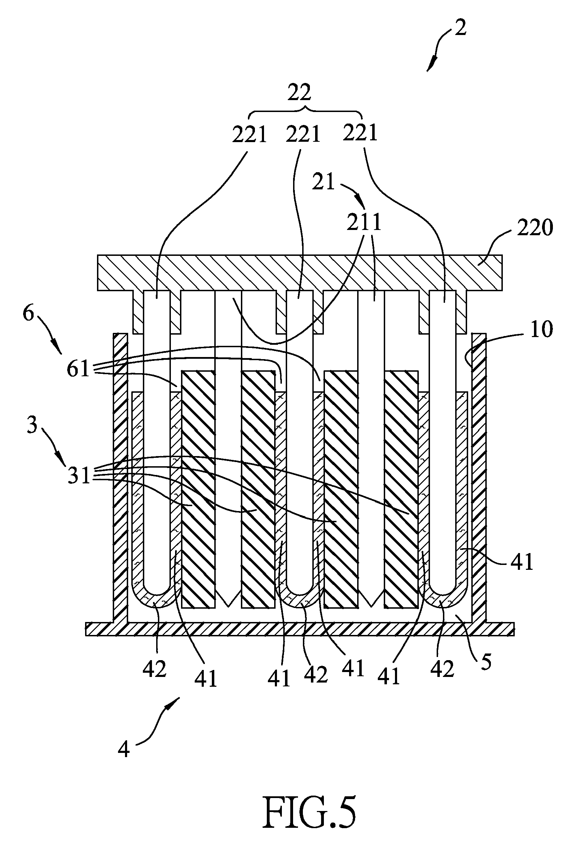

Fig. 5 illustrates a lead-acid battery according to a fourth preferred embodiment of this invention. The fourth preferred embodiment is similar to the second preferred embodiment, except that, in the fourth preferred embodiment, the capacitor electrode unit 4 further includes a plurality of joint capacitors 42 each interconnecting a pair of the capacitor electrodes 41 having the same charge polarity.

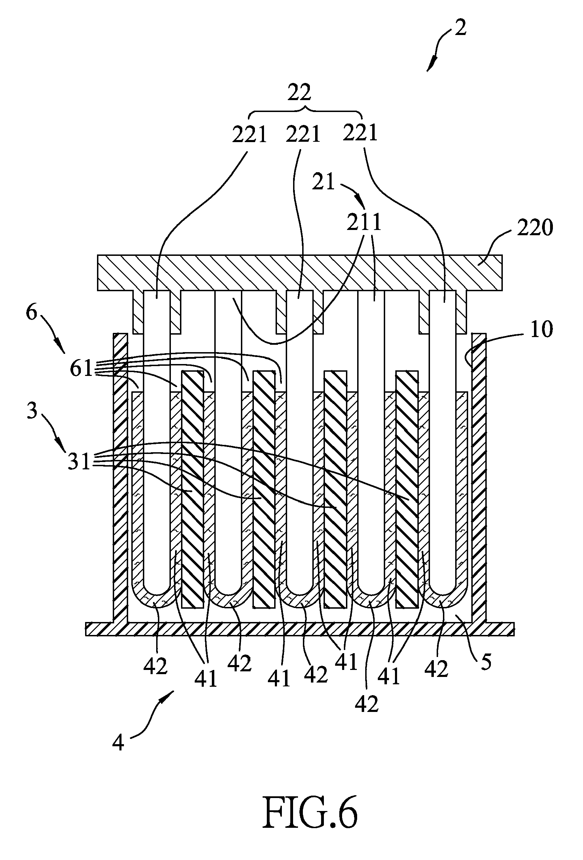

Fig. 6 illustrates a lead-acid battery according to a fifth preferred embodiment of this invention. The fifth preferred embodiment is similar to the third preferred embodiment, except that, in the fifth preferred embodiment, the capacitor electrode unit 4 further includes a plurality of joint capacitors 42 each interconnecting a pair of the capacitor electrodes 41 which have the same charge polarity, and which are in direct contact with a corresponding one of the negative and positive electrodes 221, 211.

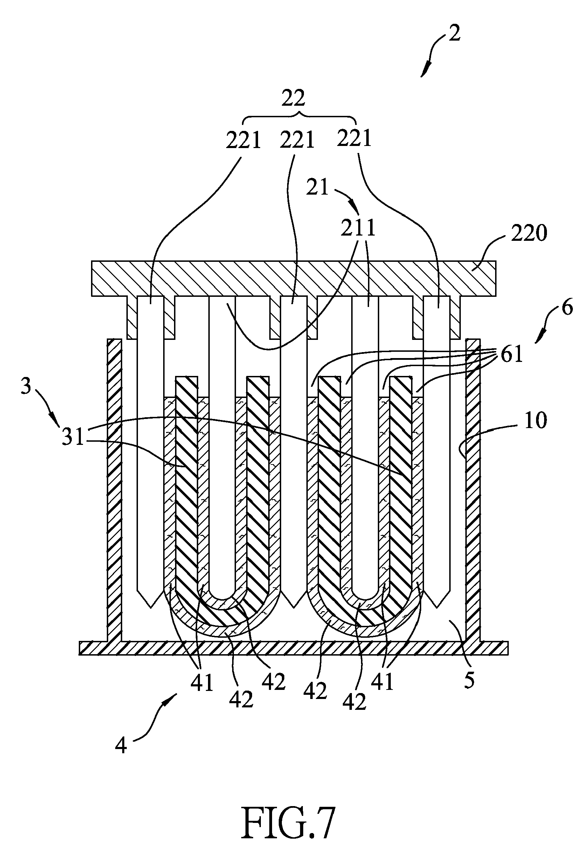

Fig. 7 illustrates a lead-acid battery according to a sixth preferred embodiment of this invention. The sixth preferred embodiment is similar to the fifth preferred embodiment. In the sixth preferred embodiment, as shown, two of the joint capacitors 42 each interconnect a pair of the capacitor electrodes 41 which have the same charge polarity, and which are in direct contact with a corresponding one of the positive electrodes 211. The other two of the joint capacitors 42 each interconnect a pair of the capacitor electrodes 41 which have the same charge polarity, and which are in direct contact with two corresponding ones of the negative electrodes 221.

## Claims

1. A lead-acid battery, which includes
a battery chamber (10) containing therein a sulfate-based electrolyte solution (5);
a lead-based negative electrode unit (22) submerged in said sulfate-based electrolyte solution (5) and extending in a lengthwise direction;
a lead dioxide-based positive electrode unit (21) submerged in said sulfate-based electrolyte solution (5) and extending in the lengthwise direction; and
a separator unit (3) which is submerged in said sulfate-based electrolyte solution (5), which extends in the lengthwise direction, and which is spaced apart from one of said lead-based negative electrode unit (22) and said lead dioxide-based positive electrode unit (21) in a transverse direction transverse to the lengthwise direction by a gap unit (6), **characterized by said lead-acid battery comprising:**
a capacitor electrode unit (4) made of a carbon-based fiber material, and extending in the lengthwise direction, said capacitor electrode unit (4) being configured to be fitted in said gap unit (6) so as to be brought into direct contact with said one of said lead-based negative electrode unit (22) and said lead dioxide-based positive electrode unit (21).

2. The lead-acid battery of Claim 1, **characterized in that** said capacitor electrode unit (4) is flexible.

3. The lead-acid battery of Claim 2, **characterized in that** said capacitor electrode unit (4) is made from a carbon fiber fabric.

4. The lead-acid battery of Claim 3, **characterized in that** said carbon fiber fabric is manufactured by subjecting a precursor polymer web to a carbonization treatment.

5. The lead-acid battery of Claim 4, **characterized in that** said precursor polymer web is made from a material selected from the group consisting of a polyacrylonitrile-based material, a pitch-based material, a cellulose-based material, and phenol formaldehyde resins.

6. The lead-acid battery of Claim 3, **characterized in that** said lead-based negative electrode unit (22) includes a plurality of negative electrodes (221) displaced from one another in the transverse direction,
said lead dioxide-based positive electrode unit (21) including a plurality of positive electrodes (211) which are disposed alternately with said negative electrodes (221),
said gap unit (6) including a plurality of gaps (61),
said separator unit (3) including a plurality of separators (31) each being disposed to separate an adjacent pair of said negative and positive electrodes (221, 211), one of said negative and positive electrodes (221, 211) in each adjacent pair of said negative and positive electrodes (221, 211) being spaced apart from an adjacent one of said separators (31) by a respective one of said gaps (61),
said capacitor electrode unit (4) including a plurality of capacitor electrodes (41) each of which is fitted in the respective one of said gaps (61) to be brought into contact with a corresponding one of said negative and positive electrodes for sharing the same charge polarity therewith.

7. The lead-acid battery of Claim 6, further **characterized by** a plurality of joint capacitors (42) each interconnecting a pair of said capacitor electrodes (41) having the same charge polarity.

8. The lead-acid battery of Claim 7, **characterized in that** each of said joint capacitors (42) is made from a carbon fiber fabric the same as that of said pair of said capacitor electrodes (41).

9. The lead-acid battery of Claim 8, **characterized in that** each of said joint capacitors (42) is integrally formed with said pair of said capacitor electrodes (41).

10. The lead-acid battery of Claim 6, **characterized in that** each of said capacitor electrodes (41) is adhesively bonded to a corresponding one of said separators (31).

11. The lead-acid battery of Claim 6, **characterized in that** each of said capacitor electrodes (41) has a specific surface area greater than 800 m²/g.
